# EUROPÄISCHE PATENTANMELDUNG

(11) **EP 2 980 709 A1**
(43) Veröffentlichungstag der Anmeldung: **03.02.2016**
(21) Anmeldenummer: 14179543.5
(22) Anmeldetag: 01.08.2014
(51) Int. Cl.: G06F 17/30

(54) **Verfahren und Vorrichtung zum Wiedergeben von Zusatzinformationen zu Videodaten**

(71) Anmelder: NetRange MMH GmbH, 20354 Hamburg (DE)
(72) Erfinder: Wendt, Jan, 20251 Hamburg (DE)
(74) Vertreter: Graf Glück Kritzenberger

(57) **Zusammenfassung**

Die Erfindung betrifft ein Verfahren zum Wiedergeben von Zusatzinformationen zu Videodaten zusätzlich zu mit den Videodaten übermittelten Metadaten, auf einer Vorrichtung (10) mit einem Videowiedergabegerät (12), mit einem Empfangsgerät (14) zum Empfang von Videodaten und korrelierten Metadaten, und eine Suchmaschine (40) zum Durchführen von Netzwerkrecherchen aufweist. In dem Verfahren werden durch Betätigen eines Startelements (24) aus den Metadaten kontextrelevante Schlagworte extrahiert, und anschließend werden die extrahierten kontextrelevanten Schlagworte automatisch der Suchmaschine (40) zur Ermittlung von kontextbezogenen Zusatzinformationen zugeleitet. Die von der Suchmaschine ermittelten kontextbezogenen Zusatzinformationen werden auf dem Videowiedergabegerät (12) und/oder einem damit in Verbindung stehenden Audiowiedergabegerät wiedergegeben (28). Auf diese Weise können schnell und einfach kontextrelevante Zusatzinformationen während einer Fernsehsendung vom Nutzer angefordert werden.

## Beschreibung

Die vorliegende Erfindung betrifft ein Verfahren und eine Vorrichtung zum Wiedergeben von Zusatzinformationen zu Videodaten zusätzlich zu mit den Videodaten übermittelten Metadaten. Derartige Metadaten sind zum Beispiel Teletext oder Videotextinformationen die zusätzlich zum Videostream oder Fernsehstream mit übertragen werden. Derartige Metadaten umfassen auch zum Beispiel EPG-Daten mit Untertiteln, Untertitel als auch akustische Informationen für Hörgeschädigte.

Der Erfindung liegt die Aufgabe zugrunde, im Bedarfsfall zusätzliche Informationen über den aktuell wiedergegebenen Video- oder Fernsehtitel zu erhalten.

Diese Aufgabe wird mit einem Verfahren gemäß Anspruch 1 und einer Vorrichtung gemäß Anspruch 13 gelöst. Vorteilhafte Weiterbildungen der Erfindung sind Gegenstand der abhängigen Ansprüche.

In dem erfindungsgemäßen Verfahren wird ein Videowiedergabegerät, wie zum Beispiel ein Fernseher, ein Bildschirm oder ein Beamer verwendet. Weiterhin wird ein Stream von Video- oder Fernsehdaten über ein Empfangsgerät empfangen, welches Empfangsgerät auch zum Empfang von korrelierten Metadaten geeignet ist. Ein derartiges Empfangsgerät kann z.B. ein im Fernsehen angeordneter Tuner oder eine Top-Box oder ein ähnliches Gerät sein, wie zum Beispiel auch eine Spielekonsole mit Empfangseigenschaften. Weiterhin hat die Vorrichtung einen Netzwerkanschluss, insbesondere einen Internetanschluss, und eine Suchmaschine zum Durchführen von Netzwerkrecherchen in dem angeschlossenen Netzwerk, insbesondere Internet. Zum Starten eines Suchvorgangs nach kontextbezogenen Zusatzinformationen wird ein Startelement betätigt, wie zum Beispiel eine Betätigungstaste einer Fernbedienung. Nach Betätigung des Startelements werden aus den Metadaten kontextrelevante Schlagworte extrahiert. Entweder liegen die Schlagworte bereits in den Metadaten vor oder sie werden zum Beispiel in einer Evaluierungseinheit aus den Metadaten extrahiert. Wenn dieMetadaten als Audiostream vorliegen, muss beispielsweise eine Datenkonvertierung in maschinenverarbeitbare Daten durchgeführt werden, in diesem Fall in einem Audio-Worterfassungssystem. Die Evaluierungseinheit kann zum Beispiel in Verbindung mit dem Empfangsgerät oder einer zentralen Steuerung, insbesondere einem Mikroprozessor, vorgesehen sein. Nach dem Extrahieren der Schlagwörter werden diese automatisch der Suchmaschine zur Ermittlung von kontextbezogenen Zusatzinformationen übermittelt werden.

Die über das Netzwerk, insbesondere Internet, von der Suchmaschine ermittelten Zusatzinformationen werden dann gegebenenfalls nach Zwischenspeicherung auf einem internen Speicher, z.B. einer Festplatte auf dem Videowiedergabegerät, insbesondere in der Art eines Overlays, zum aktuell wiedergegebenen Video- oder Fernsehstream wiedergegeben. Anstelle eines Overlays kann auch der Video/Fernsehstream zeitweise angehalten und zwischengespeichert werden und in dieser Zeit der gesamte Bildschirm für die Wiedergabe der Zusatzinformationen genutzt werden. Diese Zusatzinformationen können in einem interaktiven browserbasierten Eingabefenster angezeigt werden, welches mittels einer Fernbedienung oder einer Tastatur zur Eingabe von Daten benutzt werden kann, um somit zum Beispiel in Verbindung mit dem aktuell wiedergegebenen Video/Fernsehstream Transaktionen, z.B. einen Kauf, durchführen zu können oder Meinungen oder andere Statements abgeben zu können, z.B. über Facebook® oder Twitter®.

Nach Bedarf können die von der Suchmaschine ermittelten kontextbezogenen Zusatzinformationen noch einmal durch eine Evaluierungseinheit auf ihre Relevanz zum wiedergegebenen Videostream hin beurteilt werden und die Wiedergabe auf dem Videowiedergabegerät von dieser Beurteilung abhängig gemacht werden. Falls mehrere kontextbezogenen Zusatzinformationen aufgefunden werden, können diese wahlweise auch in einem Zwischenspeicher abgelegt werden und dann mittels der Fernbedienung untereinander oder nacheinander auf dem Videowiedergabegerät wiedergegeben werden. Die Steuerung kann dann mittels einer Fernbedienung oder mittels einer an das Wiedergabegerät oder die Top-Box oder einen damit korrelierten Rechner angeschlossene Tastatur vorgenommen werden.

Falls die Metadaten zum aktuell wiedergegebenen Video- oder Fernsehstream bereits in Form von kontextbezogenen Schlagworten vorliegen, erübrigt sich das Vorsehen einer hierfür konzipierten Evaluierungseinheit, da diese Stichworte direkt in die Suchmaschine eingespeist werden können. Andernfalls ist eine Evaluierungseinheit zum Generieren von kontextrelevanten Schlagworten notwendig.

Selbstverständlich kann anstelle des Internets auch ein lokales Netzwerk verwendet werden, welches vorzugsweise über entsprechende Bibliotheken verfügt, die einen ausreichenden Wissensfundus für die Bereitstellung der kontextbezogenen Zusatzinformationen bildet.

Als Metadaten können insbesondere Untertitel, Sprachdaten für Hörgeschädigte, Teletext oder Videotextdaten verwendet werden.

Im Falle der Betätigung des Startelements werden die entsprechenden Metadaten automatisch geladen, gegebenenfalls evaluiert und der Suchmaschine zugeführt. Auf diese Weise wird ein schnelles Rechercheergebnis erzielt, ohne dass der Anwender in den Rechercheprozess miteinbezogen werden muss.

In einer vorteilhaften Weiterbildung der Erfindung kann auf dem Wiedergabegerät oder auf einer Fernbedienung auch ein Eingabemenu angezeigt werden, welches es dem Anwender erlaubt, verschiedene Kategorien von kontextbezogenen Zusatzinformationen recherchieren zu lassen, wie zum Beispiel historische Daten, Angebote zu dem Thema, geschäftliche Transaktionen in Verbindung mit dem Thema, kulturelle Informationen oder geschäftliche Informationen zu dem Thema. Nach Auswahl der entsprechenden Kategorie, zum Beispiel mittels der Fernbedienung, wird der Suchbereich der Suchmaschine automatisch auf die entsprechende ausgewählte Kategorie beschränkt. Dies ermöglicht es dem Anmelder, schneller die für ihn relevanten Daten zu ermitteln, wobei auch eine größere Wahrscheinlichkeit erzielt wird, dass die kontextbezogenen Zusatzinformationen den Erwartungen entsprechen.

Diese Metadaten enthalten oft Schlagwörter, die es erlauben, den inhaltlichen Kontext des jeweiligen Fernsehprogramms in Echtzeit mittels einer Suchmaschine zu ermitteln. Die von der Suchmaschine verwendeten Datenquellen können dynamisch sein, verändern sich also in Abhängigkeit von dem jeweils aktuellen Inhalt des Fernsehprogramms, während andere Datenquellen statisch sein können, sich also während eines laufenden Fernsehprogramms nicht verändern.

Die Suchmaschine als auch eventuelle Zwischenspeicher zur Zwischenspeicherung von Daten können in Verbindung mit dem Empfangsgerät entweder in dem Fernseher oder in einer Top-Box oder in einem separaten Rechner oder einer übergreifenden Steuerung angeordnet sein. Sie können in einem Gerät integriert oder auf verschiedene Module verteilt sein.

Vorzugsweise ist eine Datenbank mit einem sozialen Netzwerk verknüpft, so dass in Echtzeit aktuelle Informationen der sozialen Netzwerke, wie zum Beispiel Facebook® oder Twitter® auf dem Videowiedergabegerät wiedergegeben werden können.

Die Wiedergabe kann vorzugsweise als Overlay auf dem aktuellen Videobild wiedergegeben werden. Die Videowiedergabe bzw. Wiedergabe des Fernsehprogramms kann jedoch auch unterbrochen werden, zum Beispiel unter Nutzung eines Fernsehers mit einem Speichermedium. Während der Unterbrechung kann der gesamte Bildschirm des Videowiedergabegerätes für die Darstellung der Zusatzinformationen, eventuell sogar eines interaktiven Fensters, zum Beispiel durch Nutzung von Java Applets, genutzt werden. Mit einem Knopfdruck der Fernbedienung kann dann das laufende Fernseh- bzw. Videoprogramm wieder fortgesetzt werden. Die Ermittlung der Zusatzinformationen kann sowohl auf dem Fernsehempfangsgerät selbst stattfinden, sofern die Zusatzinformationen dort vorhanden sind, zum Beispiel auf einer internen Datenbank, als auch auf einem entfernten Webserver, auf den die Suchmaschine über einen entsprechenden Internetanschluss zugreift.

Werden bei der Ermittlung der kontextbezogenen Zusatzinformationen in den Untertiteln, der Sendungsbeschreibung oder anderen Metadaten zu einem bestimmten Zeitpunkt des Fernsehprogramms bestimmte Schlagworte benutzt, so kann ein Suchmaschinenalgorithmus über eine Internetsuche inhaltlich passende kontextuelle Zusatzinformationen ermitteln. Solche Zusatzinformationen können etwa sein:
- Erläuterungen, zum Beispiel Lexikoneinträge, die der Zuschauer auf Wunsch aufrufen kann; dies kann etwa relevant sein, wenn im Fernsehprogramm eine Dokumentation gezeigt wird;
- Sonstige weiterführenden Informationen, zum Beispiel Angabe zu einem Film, in dem ein Schauspieler, der im laufenden Programm sichtbar ist, mitgewirkt hat; oder zum Beispiel bei einer laufenden Fußballübertragung Angaben zum Ausgang früherer Begegnungen der beteiligten Mannschaften oder zu den letzten Torschützen;
- Werbeeinblendungen im oben genannten Beispiel, etwa für Hochzeitskleider, Schiffsreisen etc.;
- Echtzeitdiskussion des ermittelten thematischen Kontextes in sozialen Medien, zum Beispiel in Facebook und Twitter;
- Weiterführende Informationen über die Betätigung von Hyperlinks;
- Weiterführende Informationen zur späteren Anzeige vormerken, indem sie über die Fernbedienung des Gerätes in einem Zwischenspeicher abgelegt werden;
- Rechtsgeschäftliche Transaktionen vornehmen, zum Beispiel ein bestimmtes Produkt erwerben;
- bestimmte Daten eingeben, zum Beispiel Telefonnummer etc.

Die kontextbezogenen Zusatzinformationen müssen somit nicht reine Wiedergabe sein, sondern können interaktive Felder sein, die eine Interaktion und damit auch die Eingabe von Daten ermöglichen.

Durch die Zusatzinformationen, zum Beispiel Aufrufen von Hyperlinks, kann auch vorzugsweise automatisch der Wiedergabemodus des Videowiedergabegeräts geändert werden, indem es so zum Beispiel vom Wiedergabebetrieb auf den Browsermodus umschaltet, in welchem Webseiten innerhalb des Internets besucht werden können. Ein Zurückschalten auf den Videowiedergabebetrieb ist vorzugsweise durch eine einfache Betätigung einer Taste an der Fernbedienung möglich.

Eine erfindungsgemäße Vorrichtung zur Wiedergabe von Zusatzinformationen zu korrelierten Videodaten enthält ein Videowiedergabegerät, insbesondere einen Fernseher, ein Empfangsgerät zum Empfang von Videodaten, insbesondere Fernsehsendungen und korrelierten Metadaten, ein Startelement, zum Beispiel eine Betätigungstaste an einer Fernbedienung zur Initiierung der Wiedergabe von kontextbezogenen Zusatzinformationen, eine Suchmaschine mit Datenbankzugang, z.B. Netzwerkzugang bzw. Internetzugang, einer Steuerung zur Steuerung der Vorrichtung, und optional eine erste Evaluierungseinheit zur Generierung von Schlagwort aus den mit den Videodaten übermittelten Metadaten. Die Steuerung ist dazu konzipiert, die Suchmaschine nach Erhalt eines Signals von dem Startelement zu einer Datenbanksuche nach kontextbezogenen Informationen zu veranlassen. Falls die aktuell übertragenen Metadaten keine kontextrelevanten Schlagworte aufweisen ,werden diese der optionalen ersten Evaluierungseinheit zugeführt. Diese extrahiert aus den Metadaten kontextrelevante Schlagworte, wleche dann der Suchmaschine zugeführt werden, die in einer lokalen Datenbank, im Intranet oder Internet nach kontextbezogenen Zusatzinformationen recherchiert, welche nach dem Auffinden auf dem Videowiedergabegerät dargestellt werden. Die oben genannten Komponenten können wahlweise in einem Fernseher, insbesondere Smart-TV oder Internet-TV und/oder in einer Top-Box und/oder in einem separaten Rechner enthalten sein, der für einen Internetzugang ausgebildet ist.

Vorzugsweise werden auch die von der Suchmaschine ermittelten kontextbezogenen Informationen in derselben optionalen ersten Evaluierungseinheit und einer weiteren zweiten Evaluierungseinheit auf ihre Relevanz hin überprüft, bevor sie auf dem Wiedergabegerät wiedergegeben werden.

Allgemein können anstelle der Wiedergabe auf dem Wiedergabegerät die kontextbezogenen Zusatzinformationen in einem Zwischenspeicher abgelegt werden, dessen Inhalt dann auf dem Videowiedergabegerät browserbasiert, zum Beispiel auf separaten Seiten, angezeigt werden kann. Auf diese Weise ist es möglich, mehrere Suchmaschinentreffer hintereinander anzeigen zu lassen, so dass der Anwender aus einer gewissen Auswahl an kontextbezogenen Zusatzinformationen die treffendste aussuchen kann. Eine Evaluierung des Rechercheergebnisses der Suchmaschine hat den Vorteil, dass der Anwender nicht mit einer Vielzahl von Suchmaschinentreffern überschwemmt wird, die nur einen geringen Kontextbezug haben. Die Trefferquote wird somit deutlich erhöht.

Vorzugsweise hat die Vorrichtung auch eine Fernbedienung und/oder Tastatur, über welche die Startbefehle zum Starten einer Suche nach kontextbezogenen Zusatzinformationen gestartet werden kann, und welche in der Lage ist, in den von der Suchmaschine ermittelten Treffern zu browsen bzw. den interaktiven Eingabefeldern zu navigieren und dort Daten einzugeben.

Insbesondere hat hierfür das Wiedergabegerät, insbesondere der Fernseher, vorzugsweise die Funktionalität eines Internetbrowsers.

Die kontextbezogenen Zusatzinformationen können alternativ oder zusätzlich auch als Audiodaten über den Lautsprecher des Videowiedergabegeräts wiedergegeben werden. Die Erfindung wird nachfolgend beispielsweise anhand der schematischen Zeichnung beschrieben.

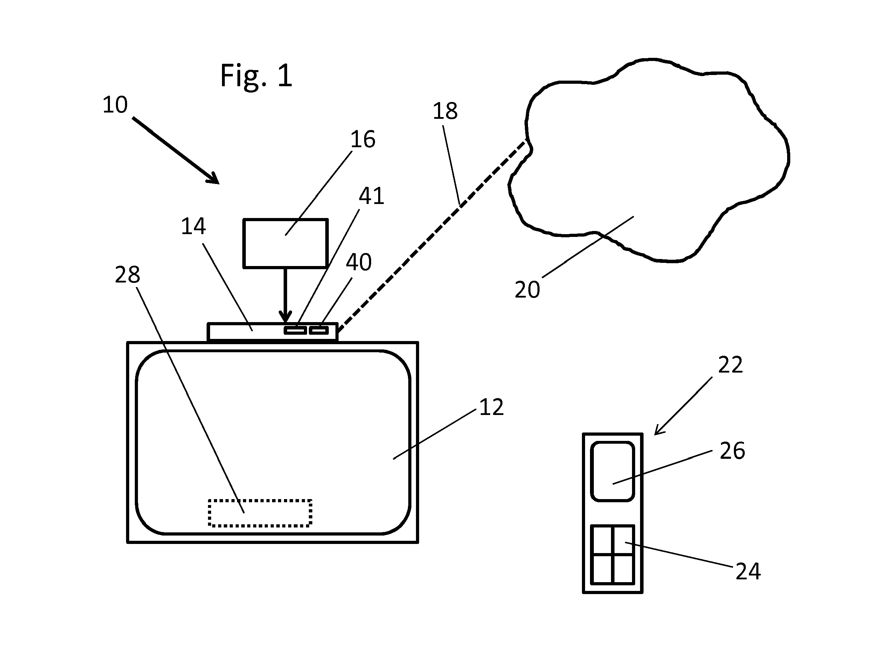

Fig. 1 zeigt ein erfindungsgemäßes System mit einem Fernseher 12 als Videowiedergabegerät, einer Top-Box 14, die mit einem Fernsehsender oder Videostreamprovider 16 insbesondere über Kabel oder Satelliten oder terrestrischen Empfang verbunden ist. Die Top-Box 14 hat eine Verbindung 18 mit dem Internet 20, welche Verbindung als bidirektionale Datenverbindung ausgebildet ist. Die Top-Box 14 hat eine Verbindung zu dem Bildschirm 12 und ist über eine Fernbedienung 22 bedienbar, welche Fernbedienung eine Tastatur 24 und ein Display 26 aufweist.

Eine Taste der Tastatur 24 der Fernbedienung 22 ist als Starttaste für die Bereitstellung von kontextbezogenen Zusatzinformationen ausgebildet.

Die Top-Box 14 empfängt so zum Beispiel eine Fernsehsendung, über welche der Anwender weitere Informationen haben will. In diesem Fall drückt er als Startelement eine Taste auf der Tastatur 24 der Fernbedienung 22. Hierauf wird ein in der Top-Box 14 angeordneter Rechner veranlasst, die Metadaten der laufenden Fernsehsendung auf kontextrelevante Schlagworte zu analysieren. Falls diese Schlagworte schon in den Metadaten vorliegen, können diese direkt einer Suchmaschine 40, z.B. in der Top-Box 14 zugeführt werden. Falls die Metadaten nicht in Form von Schlagworten vorliegen, müssen in einer Evaluierungseinheit, z.B. in der Top-Box 14 aus den Metadaten die kontextrelevanten Schlagworte extrahiert werden. Wenn zum Beispiel die Metadaten nur in Form eines Audiotextes für Hörgeschädigte vorliegen, müssen diese durch eine Spracherkennung analysiert und die kontextrelevanten Schlagworte extrahiert werden. Die kontextrelevanten Schlagworte werden dann automatisch der in der Top-Box 14 angeordneten Suchmaschine 40 zugeleitet, die über die Verbindung 18 im Internet 20 nach relevanten Inhalten bezüglich der kontextrelevanten Schlagworte sucht. Alternativ kann auch eine Datenbank, z.B. in Art einer Festplatte 41 lokal vorhanden sein, in welcher die Suchmaschine sucht, so z.B. in Form lexikalischen Wissens auf der Festplatte 41 in der Top-Box 14. So kann selbst dann, wenn keine Verbindung zum Internet existiert, seitens der Suchmaschine 40 eine interne Suche in den Datenbanken auf der Festplatte 41 der Top-Box durchgeführt werden. Die Top-Box 14 hat somit eine ähnliche Funktionalität wie ein Computer. Wenn kontextbezogene Zusatzinformationen entweder von einer internen Datenbank und/oder aus dem Internet gefunden worden sind, können diese Informationen bedarfsweise wiederum in einer Evaluierungseinheit auf ihre Relevanz überprüft werden. In jedem Fall werden die gefundenen Treffer in einem Overlay-Fenster 28 auf dem Bildschirm 12 angezeigt. Der Anwender kann vorzugsweise über die Tastatur 24 der Fernbedienung 22 zwischen unterschiedlichen Treffern hin und her schalten. Durch einen weiteren Druck auf eine Tastatur kann das Overlay-Fenster 28 aus dem Bildschirm 12 wieder ausgeblendet werden.

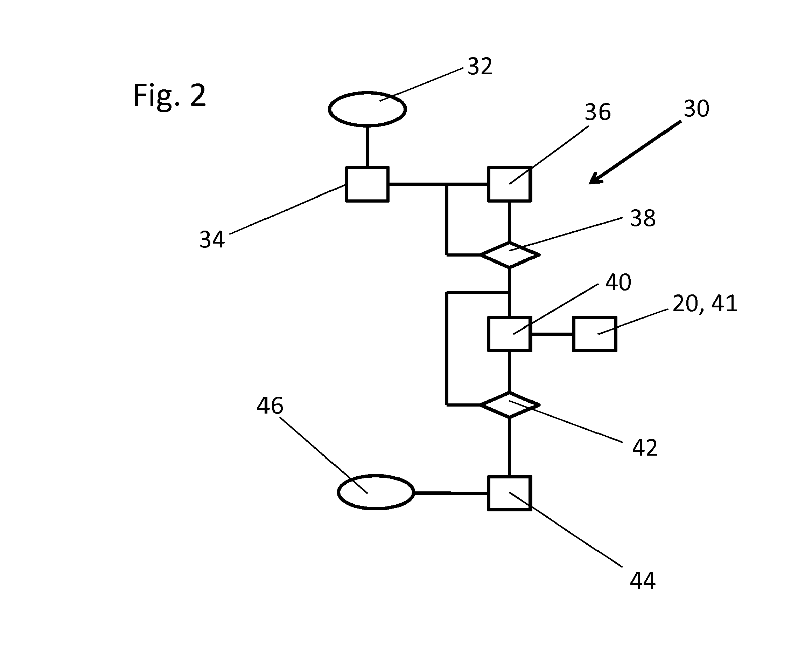

Fig. 2 zeigt das Ablaufdiagramm 30 eines Suchvorgangs nach kontextbezogenen Zusatzinformationen. Mit der Betätigung des Startelements, das heißt einer Taste der Tastatur 24 der Fernbedienung 22, startet der Vorgang am Startpunkt 32 und läuft zum Punkt 34, an welchem die mit dem Video/Fernsehsignal übertragenen Metadaten, wie zum Beispiel Videotext, Teletext, Untertitel, abgerufen werden. Im nächsten Schritt werden die abgerufenen Metadaten optional in im Schritt 36 analysiert und auf kontextrelevante Schlagworte hin untersucht. Diese kontextrelevanten Schlagworte werden in einer nachfolgenden Evaluierungseinheit 38 evaluiert, und wenn sie als tauglich für eine Internetsuche befunden werden, zur Suchmaschine 40 weitergeleitet. Die Analyse 36 und die Evaluierung können beide in der ersten Evaluierungseinheit 38 durchgeführt werden. Die Suchmaschine 40 führt anhand der ermittelten Schlagworte eine Datenbankrecherche, beispielsweise im Internet 20 oder in einer lokalen Datenbank 41 durch. In einer zweiten Evaluierungseinheit 42 werden die bei der Datenbanksuche ermittelten Treffer wiederum evaluiert und als relevant erachtete Treffer werden im Schritt 44 in dem Overlay-Fenster 28 auf dem am Bildschirm 12 wiedergegeben. Mit Betätigung einer Ende-Taste auf der Tastatur 24 der Fernbedienung 22 im Schritt 46 wird der gesamte Suchvorgang beendet.

Es ist hierbei möglich, mehrere Treffer zuzulassen, so dass im Schritt 44 anstelle der direkten Darstellung des Rechercheergebnisses auf dem Bildschirm 12 die Treffer auch in einem Zwischenspeicher abgelegt werden können und dann gesteuert über die Tastatur 24 der Fernbedienung 22 auf dem Overlay-Fenster 28 des Bildschirms 12 nacheinander zur Anzeige gebracht werden.

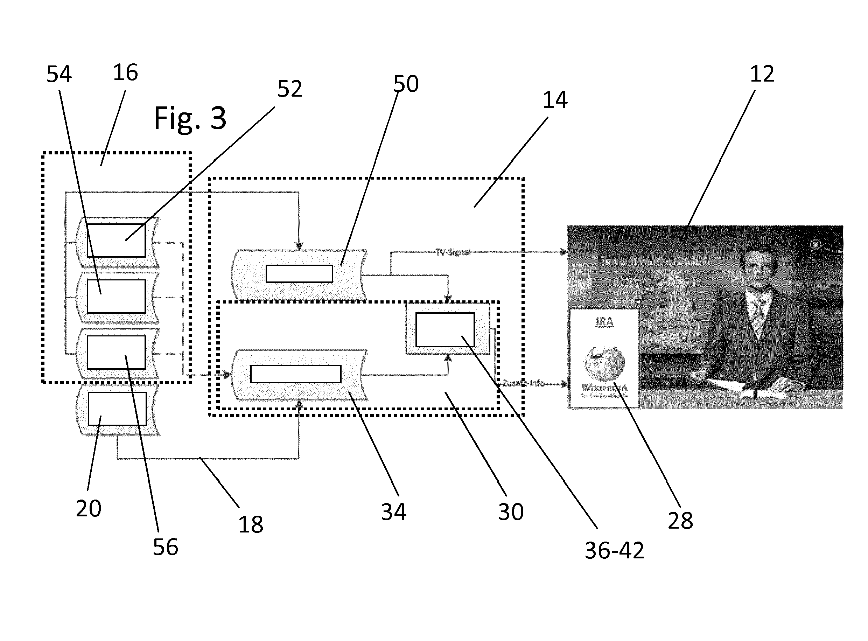

Fig. 3 zeigt ein grundsätzliches Setting für das erfindungsgemäße System zur Darstellung von kontextbezogenen Zusatzinformationen. Das TV-Signal wird hierbei aus üblichen Bezugsquellen bzw. Empfängern wie zum Beispiel aus einem analogen Signal 52, einem digitalen TV-Signal (IPTV) 54 oder einem digitalen TV-Signal DVB 56 bezogen. Diese Sendequellen sind unter Bezugnahme auf Fig. 1 gemeinschaftlich mit dem Bezugszeichen 16 versehen. Diese Daten werden einem Empfänger 50 in der Top-Box 14 übermittelt, welcher ein TV-Signal für den Bildschirm 12 bereitstellt. Die Daten aus dem Internet 20 werden über die bidirektionale Verbindung 18 einer ersten Evaluierungseinheit 16,18 und einer Suchmaschine 40 zugeleitet, wie sie schematisch in Fig. 2 wiedergegeben sind. Somit kann der in Fig. 2 gezeigte Such-Algorithmus 30 die Metadaten sowohl aus dem Sendesignal der Video- oder Fernsehquelle 16 als auch über das Internet 20 beziehen. Über den in Fig. 2 dargestellten Such- und Evaluierungsalgorithmus werden anhand der Metadaten kontextbezogene Zusatzinformationen über die Verbindung 18 aus dem Internet 20 ermittelt und auf dem Overlay-Fenster 28 des Bildschirms dargestellt.

Die Erfindung ist nicht auf die oben beschriebenen Beispiele beschränkt. So müssen zum Beispiel in dem in Fig. 2 dargestellten Such- und Evaluierungsalgorithmus 30 keine zwei Evaluierungseinheiten 36, 38; 42, nämlich eine für die Metadaten und eine für die Suchergebnisse, vorgesehen sein. Falls Metadaten bereits Schlagworte enthalten, die als Ausgangspunkt einer Internetsuche verwendet werden können, kann die erste Evaluierungseinheit 36, 38 entfallen. Falls keine Evaluierung der von der Suchmaschine gefundenen Treffer gewünscht ist, kann auch die zweite Evaluierungseinheit 42 entfallen. Somit sind die beiden Evaluierungseinheiten optional und dienen lediglich dazu, die Qualität der ermittelten Zusatzinformationen zu verbessern.

Es soll weiterhin klargestellt sein, dass die gesamte Hardware entweder in einem Fernseher, in einer Top-Box oder in irgendeinem Zusatzgerät vorgesehen sein kann. Die unterschiedlichen Komponenten, wie zum Rechner, Suchmaschine, Festplatten, können auch auf unterschiedliche Module oder Geräte verteilt oder in einem Gerät integriert angeordnet sein.

## Patentansprüche

1. Verfahren zum Wiedergeben von Zusatzinformationen zu Videodaten zusätzlich zu mit den Videodaten übermittelten Metadaten, auf einer Vorrichtung (10) mit einem Videowiedergabegerät (12), mit einem Empfangsgerät (14) zum Empfang von Videodaten und korrelierten Metadaten, und mit einer Suchmaschine (40) zum Durchführen von Datenbankrecherchen, in welchem Verfahren durch Betätigen eines Startelements (24) aus den Metadaten kontextrelevante Schlagworte extrahiert werden, und anschließend die extrahierten kontextrelevanten Schlagworte automatisch der Suchmaschine (40) zur Ermittlung von kontextbezogenen Zusatzinformationen zugeleitet werden, und die von der Suchmaschine ermittelten kontextbezogenen Zusatzinformationen auf dem Videowiedergabegerät (12) und/oder einem damit in Verbindung stehenden Audiowiedergabegerät wiedergegeben (28) werden.

2. Verfahren nach Anspruch 1, bei dem die kontextrelevanten Schlagworte aus den Metadaten in einer ersten Evaluierungseinheit (36, 38) extrahiert werden.

3. Verfahren nach Anspruch 1 oder 2, bei dem die von der Suchmaschine (40) ermittelten kontextbezogenen Zusatzinformationen in einer zweiten Evaluierungseinheit (42) auf ihre Relevanz hin überprüft und nur relevante kontextbezogene Informationen wiedergegeben werden.

4. Verfahren nach einem de vorhergehenden Ansprüche, bei dem die Suche von der Suchmaschine (40) im Internet (20) durchgeführt wird.

5. Verfahren nach einem der vorhergehenden Ansprüche, bei dem die Suche seitens der Suchmaschine (40) in einer lokalen Datenbank (41) durchgeführt wird.

6. Verfahren nach einem der vorhergehenden Ansprüche, bei dem als Metadaten Teletext-Daten, Untertitel oder Sprachdaten für Hörgeschädigte verwendet werden.

7. Verfahren nach einem der vorhergehenden Ansprüche, bei dem auf dem Wiedergabegerät (12) auf Aufforderung ein Eingabemenu angezeigt wird, in welchem unterschiedliche Kategorien von Zusatzinformationen zur Auswahl angeboten werden, und dass der Suchbereich der Suchmaschine (40) auf die ausgewählte Kategorie eingeschränkt wird.

8. Verfahren nach einem der vorhergehenden Ansprüche, bei dem die Suchmaschine (40) beider Datenbankrecherche mit sozialen Netzwerken verbunden wird.

9. Verfahren nach einem der vorhergehenden Ansprüche, bei dem die kontextbezogenen Zusatzinformationen als Overlay-Fenster (28) auf einem aktuell wiedergegebenen Fernseh/Videostream wiedergegeben werden.

10. Verfahren nach einem der vorhergehenden Ansprüche, bei dem die kontextbezogenen Zusatzinformationen Netzwerk-Links beinhalten, deren Aktivierung ein automatisches Umschalten des Videowiedergabegeräts auf Browserbetrieb initiieren.

11. Verfahren nach einem der vorhergehenden Ansprüche, bei dem aufgrund der kontextbezogenen Zusatzinformationen ein browserbasiertes interaktives Fenster zum Wiedergeben und Eingeben von Daten auf dem Videowiedergabegerät geöffnet wird.

12. Vorrichtung (10) zur Wiedergabe von kontextrelevanten Zusatzinformationen zu korrelierten Videodaten zusätzlich zu mit den Videodaten übermittelten Metadaten, umfassend ein Videowiedergabegerät (12), insbesondere Fernseher, ein Empfangsgerät (14) zum Empfang von Videodaten und korrelierten Metadaten, einem Startelement (24) zur Initiierung der Suche nach kontextbezogenen Zusatzinformationen, einer Suchmaschine (40) mit Zugang zu einer Datenbank (20, 41), einer Steuerung für die Vorrichtung, welche Steuerung dazu konzipiert ist, die Suchmaschine (40) nach Erhalt eines Signals eines Startelement (24) zu einer Netzwerksuche nach kontextbezogenen Informationen zu veranlassen und bei der Suche ermittelte kontextbezogene Informationen auf dem Videowiedergabegerät (12) darzustellen.

13. Vorrichtung nach Anspruch 12, weiterhin enthaltend eine erste Evaluierungseinheit (36, 38) zur Generierung von kontextbezogenen Schlagworten aus den mit den Videodaten übermittelten Metadaten.

14. Vorrichtung nach Anspruch 12 oder 13, weiterhin enthaltend eine zweite Evaluierungseinheit (42), die dazu konzipiert ist, die von der Suchmaschine (40) ermittelten kontextbezogenen Informationen auf ihre Relevanz hin zu überprüfen, und in Abhängigkeit vom Evaluierungsergebnis deren Wiedergabe auf dem Videowiedergabegerät und/oder einem damit verbundenen Audiowiedergabegerät (12) freizugeben oder die Suchmaschine zur Fortsetzung der Suche zu veranlassen.

15. Vorrichtung nach Anspruch 12, 13 oder 14, bei der das Empfangsgerät für die Video- und Metadaten und die Suchmaschine (40) in einer Top-Box (14) oder im Steuerteil eines Smart-TV angeordnet ist.

16. Vorrichtung nach einem der Ansprüche 12 bis 15, bei der das Startelement durch eine Taste (24) einer Fernbedienung (22) für das Videowiedergabegerät gebildet ist.

17. Vorrichtung nach einem der Ansprüche 12 bis 16, weiterhin enthaltend einen Zwischenspeicher zum Ablegen von gefundenen Suchmaschinentreffern.
